# EUROPEAN PATENT APPLICATION

(11) **EP 0 594 249 A2**
(43) Date of publication of application: **27.04.1994**
(21) Application number: 93202892.1
(22) Date of filing: 14.10.1993
(51) Int. Cl.: C08G 65/44

(54) **Process for preparing polyphenylene ethers with a low fines content**

(30) Priority: 23.10.1992 IT MI922422
(71) Applicant: ENICHEM S.p.A., I-20124 Milano (IT)
(72) Inventor: Tartari, Vittorio, I-31100 Treviso (IT); Forlin, Anna, I-35010 Vigonza (Padova) (IT); Volpe, Paola, I-35043 Monselice (Padova) (IT); Nadali, Giampietro, I-30033 Noale (Venezia) (IT); Checchin, Adriano, I-35017 Piombino Dese (Padova) (IT); Olivieri Del Castillo, Gianfranco, I-20141 Milano (IT)
(74) Representative: Fusina, Gerolamo

(57) **Abstract**

A process for preparing polyphenylene ethers in the form of powders having an average granule size of between 100 and 500 µm, more than 70% and preferably more than 80% of the granules having a size within a 200 µm range, and a maximum content of less than 0.1% of powder with a granule size of less than 10 µm, comprising in succession:
a) reacting one or more substituted phenols by oxidative polycondensation with oxygen in a solvent consisting of a toluene and methanol mixture, in the presence of a complex formed from a non-basic cupric salt and morpholine or a C-substituted derivative thereof, at a temperature of between 50 and 70°C, until a dispersion of the polyphenylene ether in the reaction solvent is obtained, and
b) recovering the polyphenylene ether obtained in this manner.

## Description

This invention relates to a process for preparing polyphenylene ethers in powder form with a low fines content.

In particular, the invention relates to a process for preparing polyphenylene ethers by oxidative condensation of one or more substituted phenols with oxygen in the presence of a copper-based catalyst.

The polyphenylene ethers (PPEs), also known as polyphenylene oxide resins, represent a well known family of engineering polymers and possess an excellent combination of thermal, mechanical and electrical properties within a wide temperature range; they also show excellent resistance to moisture. This combination of properties makes polyphenylene ethers suitable for use in a large number of applications by known thermoplastics forming techniques such as injection moulding, thermoforming, extrusion, blow-extrusion, etc.

Polyphenylene ethers are generally produced by solution or suspension processes comprising oxidizing a phenolic compound with oxygen or a gaseous mixture containing oxygen, in the presence of an oxidative coupling catalyst. These catalysts generally contain at least one compound of a transition metal such as copper, manganese or cobalt, usually in combination with other types of catalytic compounds. Examples of suitable catalysts are those containing a cuprous or cupric salt, for example a cuprous salt in combination with a tertiary and/or secondary amine, such as copper(I)chloride/trimethylamine, copper(I)chloride/dibutylamine or copper(I)chloride/pyridine, or copper(I)acetate/triethylamine, or a cupric salt in combination with a tertiary amine and an alkaline metal hydroxide, such as copper(II)chloride/pyridine/potassium hydroxide. These catalysts are described for example in USA patents 3,306,874, 3,914,226 and 4,028,341.

Another class of suitable catalysts are those containing manganese or cobalt, very often complexed with one or more chelating and/or complexing agents such as dialkylamines, alkanolamines, alkylenediamines, o-hydroxyaromatic aldehydes, Ω-hydroxyoxime, o-hydroxyaryloxime and β-diketone compounds.

All these catalysts are well known in the literature and are described for example in USA patents 3,956,242, 3,962,181, 3,965,069, 4,075,174, 4,093,595-8, 4,102,865, 4,184,034, 1,385,168 etc.

During the polymerization, water forms (one molecule per oxidative coupling step), to partly hydrolyze and inactivate catalysts based on metal complexes. In addition a part of the metal remains bonded to the ends of the macromolecule to negatively influence the PPE stability towards light and oxidizing agents and its electrical properties (reduced insulating capacity). Consequently the polyphenylene ether has to undergo successive washes with solutions of complexing agents, followed by isolation and drying of the polymer.

However if large catalyst quantities are present, even very effective washes with complexing solutions are insufficient to reduce the residual metal content to acceptable levels. There is therefore a requirement for high efficiency catalytic systems which further reduce the residual metal quantity in the polymer.

A further problem related to polyphenylene ether preparation processes is to obtain a product in a form suitable for use in the usual working and moulding processes for thermoplastic polymers such as extrusion, injection moulding, thermoforming etc.

Polyphenylene ethers are generally prepared by processes involving the formation of polymer solutions in a suitable organic solvent, to which a non-solvent is then added to precipitate and separate the polyphenylene ether.

Recovery by precipitation has however the drawback that the polymer is obtained in the form of a powder of very wide size distribution. In particular a large weight proportion of these powders consists of a very fine particulate having an average size of less than 10 micrometres.

Such fine powders require special precautions during their storage, handling and transformation because of problems relating to the ease with which they disperse in air, such as the danger of explosion, increased difficulty in operating the extrusion and moulding apparatus, and harm to operator health.

Again, the removal of the solvent by evaporation or devolatilization in an extruder involves keeping the polyphenylene ether at high temperature for a relatively long period, with consequent degradation of the polymer, which as is well known already undergoes thermal degradation at a temperature below its melting point, unless it is mixed with other polymers, such as polystyrene, which reduce its fuidification temperature.

US patent 3,923,738 describes a process for recovering polyphenylene ether from its solutions in aromatic solvents by controlled precipitation by the addition of methanol/water mixtures. However this process produces a powder the particles of which, although having a low fines content, still do not have a sufficiently narrow distribution. In addition this method is still insufficient to obtain a polyphenylene ether substantially free of catalyst residues.

US patent 4,463,164 describes a process for preparing polyphenylene ether by the oxidative polymerization of an alkylphenol in the presence of a cupric complex. The reaction is conducted preferably in a mixture of an aromatic and an aliphatic hydrocarbon so as to precipitate the polymer directly during the course of the reaction.

However in this manner the catalyst remains included within the precipitated polyphenylene ether and requires costly washing with chelating solutions for its removal.

Finally, GB patent 1,430,615 describes a process for preparing polyphenylene ethers with a low content of catalyst residues. In this process an alkylphenol is polymerized by oxidative polycondensation in a solvent medium consisting of a mixture of an aromatic solvent and an alcohol in the presence of a catalysts based on complexes obtained from a cupric salt and morpholine.

The reported examples indicate that the best results are obtained by operating the polycondensation at a temperature of between 10 and 30°C. However, even in this case the polyphenylene ether obtained is in the form of powder with an average granule size still not sufficiently high for optimum use in working processes.

In addition the powder still contains a large percentage of fines.

From the aforegoing it is therefore apparent that various difficulties arise in the preparation and working of polyphenylene ether, either as such or in mixture with other polymers, which limit its use in many applications notwithstanding the optimum thermal and mechanical properties which make it an excellent engineering polymer.

It has now been surprisingly found by the present applicant that said drawbacks can be totally and advantageously overcome by a process for preparing polyphenylene ethers in the form of particulates with a controlled particle size, a large granule size and a substantial absence of fines, conducted by using a particular combination of solutions and temperatures.

The present invention therefore provides a process for preparing, directly in the polycondensation reactor, polyphenylene ethers in the form of powders having an average granule size of between 100 and 500 µm, more than 70% and preferably more than 80% of the granules having a size within a 200 µm range, and a maximum content of less than 0.1% of powder with a granule size of less than 10 µm, comprising in succession:
a) reacting one or more phenolic derivatives of general formula (I): 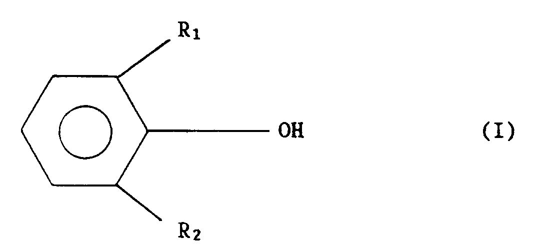 in which R₁ and R₂, which are the same or different, can be halogen such as chlorine, bromine or fluorine, or a C₁-C₁₈ hydrocarbon radical such as an alkyl or substituted alkyl radical, for example methyl, ethyl, n- or iso-propyl, n-, sec- or tert-butyl, n-amyl, n-hexyl, 2,3-dimethylbutyl, chloroethyl, methoxycarbonylethyl, cyanoethyl, hydroxyethyl, phenylethyl or hydroxymethyl, or an aryl or substituted aryl radical, for example phenyl, chlorophenyl, methylphenyl, dimethylphenyl, or ethylphenyl, or a benzyl or allyl radical, or finally a C₁-C₆ alkoxy radical such as methoxy, ethoxy, n- or iso-propoxy, or n-, iso- or tert-butoxy,
   by oxidative polycondensation effected with oxygen or an oxygen-containing gas, in a reaction medium consisting of a toluene and methanol mixture containing from 30 to 70 wt% of methanol, in the presence of a catalyst consisting of a complex formed from a non-basic cupric salt and morpholine or a C-substituted derivative thereof, at a temperature greater than 50°C and preferably between 50 and 70°C, until a dispersion of solid polyphenylene ether in the reaction medium is obtained, and
b) recovering the polyphenylene ether obtained in this manner.

Phenolic derivatives preferred for the purposes of the present invention are those compounds of formula (I) in which R₁ and R₂ independently represent a C₁-C₄ alkyl radical. In a particularly preferred embodiment the groups R₁ and R₂ are the same.

The process of the present invention enables linear polymers and copolymers to be obtained having the following formula (II): 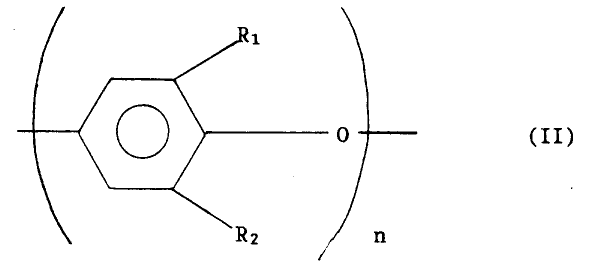
in which R₁ and R₂, which are the same or different, have the same meaning as in the preceding formula (I), and n is at least 50 and preferably between 60 and 600.

In the case of a polyphenylene ether homopolymer all the structural units within the parentheses in formula (II) are identical, whereas in the case of a copolymer two or more structural units deriving from the phenols of formula (I) are distributed statistically within the polymer chain.

Illustrative examples of specific polyphenylene ethers obtained by the process of the present invention are:
- poly(2,6-dimethyl-1,4-phenylene)ether;
- poly(2,6-diethyl-1,4-phenylene)ether;
- poly(2-methyl-6-ethyl-1,4-phenylene)ether;
- poly(2,6-dipropyl-1,4-phenylene)ether;
- poly(2-ethyl-6-propyl-1,4-phenylene)ether and the like;
poly(2,6-dimethyl-1,4-phenylene)ether is particularly preferred.

The polyphenylene ethers obtained by the present process generally have an average molecular weight, determined by gel permeation chromatography, of between 5000 and 120,000 and preferably between 20,000 and 60,000. Their intrinsic viscosity (measured in chloroform at 23°C) is greater than 0.1 dl/g and generally between 0.30 and 0.90 dl/g.

According to one embodiment of the present process, the phenolic derivatives of formula (I) are initially fed into the reaction medium in a concentration of between 0.5 and 2.5 moles/l. In another embodiment the phenolic derivatives are added in portions during the course of the reaction, in order to reduce the onset of secondary reactions

The oxidative polycondensation reaction of the present process is conducted in the presence of a catalyst consisting of a complex, soluble in the reaction medium, formed from a non-basic cupric salt and morpholine or a C-substituted derivative thereof.

Cupric salts suitable for the purposes of the present invention are, for example, copper(II) chloride, copper(II) bromide, copper(II) acetate and copper(II) nitrate. Preferred examples of C-substituted morpholine derivatives are alkylmorpholines such as methylmorpholines, ethylmorpholines and dimethylmorpholines.

A particularly preferred catalyst for the purposes of the present invention is the complex formed from morpholine and copper dichloride.

The copper(II) complex used in the present process is generally formed by bringing a quantity of cupric salt of between 1 and 200 millimoles, and preferably between 5 and 50 millimoles, per litre of reaction mixture into contact, in solution, with an excess of morpholine or a C-substituted derivative thereof having a concentration of between 1 and 200 ml, and preferably between 20 and 70 ml, per litre of reaction mixture. The copper/morpholine complex is preferably formed directly in the toluene-methanol mixture to be used for the subsequent polycondensation.

The term "gas containing molecular oxygen", as used in the present patent application, means any gas mixture containing molecular oxygen or a precursor thereof in a quantity exceeding 5 vol%. The oxygen-containing gas is preferably bubbled into the reaction mixture, but can also be introduced using any other mixing method suitable for the purpose.

Particularly critical for the purposes of the present invention is the choice of the temperature in the polycondensation step a), which must be rigorously maintained above 50°C and preferably within the range of 55-65°C. In this respect it has been observed by the present applicant that if the oxidative polycondensation of step a) of the present process is conducted at a temperature lower than 50°C, even for a lengthy time at a high phenolic monomer concentration, polyphenylene ethers having the excellent particle size distribution of those prepared by the process of the present invention are not obtained.

Again, the process is conveniently conducted at a temperature less than the boiling point of the reaction mixture, generally below 75°C. However this does not prevent the operation being performed at a higher temperature in certain cases, even up to 100°C, by maintaining the reaction mixture and the bubbling oxygen under pressure.

It has also been found that if a reaction medium different from the toluene-methanol mixtures characteristic of the present process is used, polyphenylene ethers with the particle size characteristics of the present invention cannot be obtained.

Generally the mixtures used contain from 30 to 70 wt% of methanol, the remainder being toluene. However, the presence of a small quantity, of less than 3 wt%, of other inert liquids or water in the reaction mixture produces no effect outside the scope of the present patent application.

The polyphenylene ether obtained in step a) in the form of a dispersion in the reaction medium can be recovered by one of the conventional solid-liquid separation methods, such as centrifuging, or preferably filtration. This latter can be effected in one of the known apparatus suitable for this purpose, such as filter presses or rotary filters.

According to the process of the present invention it is not necessary to remove the catalyst residues from the polyphenylene ether in order to improve its stability, and hence no washing with solutions of acid compounds or chelating agents is required. It is however preferable to wash the solid polymer once or twice with a non-solvent prior to the final filtration and drying.

The present process can be conducted either batchwise in a single stage, or continuously by suitably controlling the material and energy flows such that the reaction temperature remains within the claimed limits.

In a typical embodiment of the present process effected batchwise, in step a) the phenolic monomer is introduced together with the cupric salt and the morpholine into a reactor containing a reaction medium consisting of a mixture of toluene with 40-55 wt% of methanol. The reagent temperature is adjusted to between 55 and 65°C and oxygen is bubbled into the reactor.

The temperature is maintained within the range of 55-65°C by removing the heat of polycondensation with a cooling system.

On termination of the reaction the dispersion containing the polyphenylene ether is filtered and the polymer is again washed with methanol and dried by one of the known methods.

On termination of these operations the residual solvent quantity in the polyphenyleneoxide is practically negligible.

The polycondensation rate can be suitably controlled by varying the catalyst, phenolic monomer or oxygen concentration in the reaction mixture; however the size distribution of the resultant polyphenylene oxide, its quantity per gram of catalyst and the molecular weight of the polymer are virtually independent of said parameters, but are critically determined by the type of phenolic derivative used as the monomer, the composition of the reaction medium, the type of catalyst, the process temperature and the fluid-dynamics of the reactor.

The reaction time is not particularly critical and varies in accordance with the other chosen process parameters. In general it is chosen so that the polycondensation reaction is complete and no traces of phenolic monomer derivatives remain.

The polyphenylene ethers obtained by the present process are characterised by an excellent combination of physical, chemical and process properties which make their use particularly advantageous in the usual processes used for working these polymers, such as extrusion, compounding, moulding etc.

In particular, the polyphenylene ethers of the present invention have excellent solid particulate flow properties and an absence of fine powder, with evident advantage to the health of the operators. In addition, because of the particular catalytic system used in the polymerization, these polyphenylene ethers have a particularly low content, of between 5 and 20 ppm, of (cupric) metal residues dispersed in the polymer. They are therefore very stable towards degradation and/or yellowing, which is generally accelerated by the presence of metal residues deriving from the polycondensation catalytic system.

The polyphenylene ethers obtained by the process of the present invention, either as such or in mixture with other polymers, preferably styrene polymers, are of particular use in the manufacture of articles with high thermal, mechanical and moisture resistance properties, and as such are especially suitable for the automobile industry and for the construction of casings or coverings for mechanical, electrical or electronic equipment.

Some illustrative examples, which are in no case to be considered as limitative, are given hereinafter to allow better understanding of the present invention and its implementation.

### EXAMPLE 1

967 g of methanol, 1165 g of toluene (Tol/MeOH weight ratio = 1.2), 0.935 g of anhydrous cupric chloride and 93.5 g of morpholine (C₄H₉NO) are placed in a 5 litre cylindrical reactor fitted with an agitator and a breakwater. The solution temperature is adjusted to 60°C and maintained constant. Oxygen is bubbled through the bottom of the reactor at a rate of 18.2 Nlitres/h. 467 g of 2,6-xylenol are then fed in gradually during the course of 150 minutes. The oxygen feed is maintained constant during the addition of the monomer and for a further 60 minutes after its termination. The reactor is then purged with a stream of nitrogen and the polymer is separated by filtration and dried.

A poly(2,6-dimethyl)-4-phenylene-ether was obtained with a yield of 99% on the initial dimethylphenol, an intrinsic viscosity of 0.9 dl/g determined in chloroform at 23°C, and the following size distribution:

| size (µm) | % by weight |
|---|---|
| >270 | 0.4 |
| 233-270 | 7.1 |
| 201-233 | 20.7 |
| 173-201 | 27.0 |
| 149-173 | 24.1 |
| 129-149 | 15.4 |
| 111-129 | 5.2 |
| <111 | 0.1 |
| Apparent density 0.47 g/cc. | |

### EXAMPLE 2

130 l of a mixture having the following weight composition are fed into a reactor with a volume of 270 litres:

| | |
|---|---|
| Methanol | 43.44 % |
| Toluene | 52.25 % |
| Morpholine | 4.20 % |
| Cupric chloride | 294 ppm |
| Water | 600 ppm |

After adjusting the mixture temperature to 55°C, 2 kg/hour of oxygen and 14.2 kg/hour of 2,6-xylenol are fed continuously to the reactor under agitation for a time of 150 minutes, while maintaining the reaction temperature between 55 and 60°C. The monomer feed is suspended and the oxygen feed is continued at the same rate for a further 60 minutes while maintaining the temperature around 60°C. On termination, the reactor is purged with nitrogen and the procedure of Example 1 is followed. 35 kg of poly(2,6-dimethyl)-4-phenylene-ether are obtained with an intrinsic viscosity of 0.49 dl/g determined in chloroform at 23°C, and the following size distribution:

| size (µm) | % by weight |
|---|---|
| >490 | 6.5 |
| 420-490 | 18.0 |
| 340-420 | 33.0 |
| 270-340 | 32.0 |
| 200-270 | 9.5 |
| <200 | 1.0 |
| Apparent density 0.47 g/cc. | |

### EXAMPLE 3 (comparative)

The procedure of Example 1 is repeated with the same reagents and method, except that a reaction medium is used consisting of a mixture of 1332 g of methanol and 800 g of toluene (tol/MeOH ratio = 0.6) and the polymerization temperature is maintained constant at 35°C instead of 60°C. On termination, a poly(2,6-dimethyl)-4-phenylene-ether is obtained (yield 99%) with an intrinsic viscosity of 0.5 dl/g determined in chloroform at 23°C, and the following size distribution:

| size (µm) | % by weight |
|---|---|
| >90 | 0.5 |
| 77-90 | 6.2 |
| 67-77 | 15.9 |
| 58-67 | 22.6 |
| 50-58 | 24.9 |
| 43-50 | 21.0 |
| 37-43 | 7.7 |
| <43 | 1.2 |
| Apparent density 0.45 g/cc | |

### EXAMPLE 4 (comparative)

The procedure of Example 2 is repeated with the same reagents and method, except that the polymerization temperature is maintained around 35°C instead of 60°C. On termination, a poly(2,6-dimethyl) -4-phenylene-ether is obtained (yield 99%) with an intrinsic viscosity of 0.5 dl/g determined in chloroform at 23°C, and the following size distribution:

| size (µm) | % by weight |
|---|---|
| >78 | 0.4 |
| 50-78 | 16.6 |
| 32-50 | 38.8 |
| 18-32 | 22.9 |
| 5-18 | 19.3 |
| <5 | 1.7 |
| Apparent density 0.46 g/cc. | |

## Claims

1. A process for preparing, directly in the polycondensation reactor, polyphenylene ethers in the form of powders having an average granule size of between 100 and 500 µm, more than 70% and preferably more than 80% of the granules having a size within a 200 µm range, and a maximum content of less than 0.1% of powder with a granule size of less than 10 µm, comprising in succession:
a) reacting one or more phenolic derivatives of general formula (I): 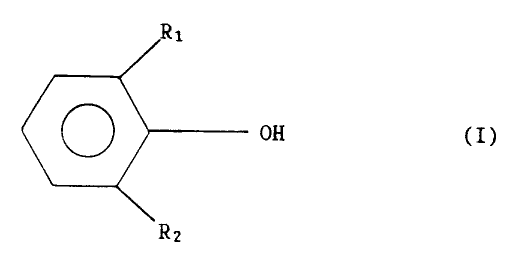 in which R₁ and R₂, which are the same or different, can be halogen such as chorine, bromine or fluorine, or a C₁-C₁₈ hydrocarbon radical such as an alkyl or substituted alkyl radical, for example methyl, ethyl, n- or iso-propyl, n-, sec- or tert-butyl, n-amyl, n-hexyl, 2,3-dimethylbutyl, chloroethyl, methoxycarbonylethyl, cyanoethyl, hydroxyethyl, phenylethyl or hydroxymethyl, or an aryl or substituted aryl radical, for example phenyl, chlorophenyl, methylphenyl, dimethylphenyl, or ethylphenyl, or a benzyl or allyl radical, or finally a C₁-C₆ alkoxy radical such as methoxy, ethoxy, n- or iso-propoxy, or n-, iso- or tert-butoxy,
by oxidative polycondensation effected with oxygen or an oxygen-containing gas, in a reaction medium consisting of a toluene and methanol mixture containing from 30 to 70 wt% of methanol, in the presence of a catalyst consisting of a complex formed from a non-basic cupric salt and morpholine or a C-substituted derivative thereof, at a temperature greater than 50°C and preferably between 50 and 70°C, until a dispersion of solid polyphenylene ether in the reaction medium is obtained, and
b) recovering the polyphenylene ether obtained in this manner.

2. A process as claimed in claim 1, wherein the oxidative polycondensation of step a) takes place at a temperature of between 55 and 65°C.

3. A process as claimed in claim 1 or 2, wherein in step a) the phenolic derivative of formula (I) is fed in successive portions, or continuously, during the course of the oxidative polycondensation.

4. A process as claimed in claim 3, wherein the oxygen feed is continued after the phenolic derivative addition is complete.

5. A process as claimed in claim 1 or 2, wherein in step a) the entire phenolic derivative of formula (I) is introduced initially into the reaction medium with a concentration of between 0.5 and 2.5 moles/l.

6. A process as claimed in any one of the preceding claims, wherein the groups R₁ and R₂ of formula (I) are independently a C₁-C₄ alkyl radical.

7. A process as claimed in any one of the preceding claims, wherein the phenolic derivative of formula (I) of claim 1 is 2,6-dimethylphenol.

8. A process as claimed in any one of the preceding claims, wherein the methanol concentration in the reaction medium is between 40 and 55 wt%.

9. A process as claimed in any one of the preceding claims, wherein the cupric salt concentration is between 1 and 200 millimoles and preferably between 5 and 50 millimoles per litre of reaction mixture.

10. A process as claimed in any one of the preceding claims, wherein the concentration of morpholine, or of its C-substituted derivative, in the reaction mixture of step a) is between 20 and 70 ml per litre of reaction mixture.

11. A process as claimed in any one of the preceding claims, wherein the phenolic catalyst is the morpholine/copper dichloride complex.

12. A process as claimed in any one of the preceding claims, wherein the polyphenylene oxide is finally obtained with a residual (cupric) metal content of between 5 and 20 ppm without effecting any wash with acid or chelating compounds.

13. A process for preparing polyphenylene ethers as claimed in claim 1, wherein the operating method and the proportions are substantially in accordance with that described in Example 2.

14. Polyphenylene ethers in the form of powders having an average granule size of between 100 and 500 µm, more than 70% and preferably more than 80% of the granules having a size within a 200 µm range, a maximum content of less than 0.1% of powder with a granule size of less than 10 µm, an intrinsic viscosity (measured in chloroform at 23°C) of between 0.3 and 0.9 dl/g and a residual (cupric) metal content of between 5 and 20 ppm, characterised by being prepared by the process described in any one of the preceding claims.

15. Linear polyphenylene ethers in accordance with claim 14 having the following formula (II): 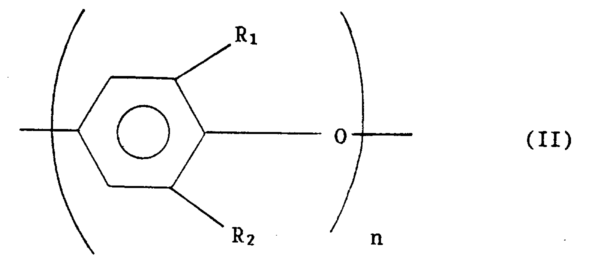 in which R₁ and R₂, which are the same or different, are C₁-C₄ alkyl groups, and n is between 60 and 600.
